# EUROPEAN PATENT SPECIFICATION

(11) **EP 1 328 111 B1**
(45) Date of publication and mention of the grant of the patent: **24.08.2005**
(21) Application number: 02250220.7
(22) Date of filing: 14.01.2002
(51) Int. Cl.: H04M 19/08, H04M 1/65, H04M 1/82

(54) **Power switch device utilizing phone loop signals to control supply of electrical power to a telephony instrument**
Leistungsschalter zur Steuerung der Versorgungsspannung für ein Telefongerät unter Verwendung des Teilnehmerleitungssignals
Dispositif de mise sous tension utilisant les signaux de la boucle téléphonique pour contrôler l'alimentation d'un appareillage téléphonique

(43) Date of publication of application: 16.07.2003
(73) Proprietor: Liu, Chung-Kun, Taichung City (TW)
(72) Inventor: Liu, Chung-Kun, Taichung City (TW)
(74) Representative: Dunlop, Brian Kenneth Charles

(56) References cited:
- GB-A- 2 068 696
- US-A- 3 688 043
- US-A- 3 711 649

## Description

The invention relates to a telephone accessory, more particularly to a power switch device that utilizes phone loop signals to control the supply of electrical power to a telephony instrument.

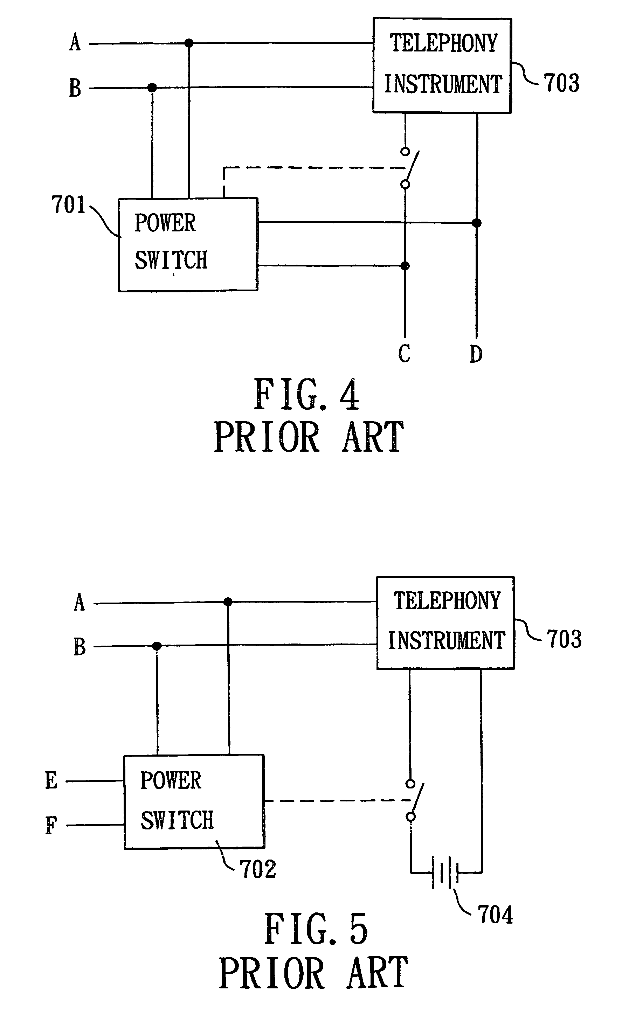

Most conventional telephony instruments, such as facsimile machines, telephone answering machines, and wireless telephone sets, are configured to draw electrical power continuously from a power source, and thus consume electrical power even when in an on-hook or waiting state. Figures 4 and 5 illustrate two conventional schemes for reducing electrical power consumption of a telephony instrument. In Figure 4, the telephony instrument 703 is connected to a local phone loop via a pair of telephone wires (A, B), and is further connected to an AC power source (not shown) via a pair of power lines (C, D). A power switch 701 is connected to the telephone wires (A, B), and is further connected to the AC power source. The power switch 701 makes or breaks connection between the power source and the power line (C) in accordance with phone loop signals at the telephone wires (A, B). In Figure 5, the telephony instrument 703 is connected to the local phone loop via a pair of telephone wires (A, B), and is further connected to a solar cell 704. A power switch 702 is connected to the telephone wires (A, B), and is further connected to an AC power source (not shown) via power lines (E, F). Similar to the circuit of Figure 4, the power switch 702 makes or breaks connection between the telephony instrument 703 and the solar cell 704 in accordance with phone loop signals at the telephone wires (A, B). Because the telephony instrument 703 is normally disconnected from the AC power source or the solar cell 704 when in the on-hook or waiting state, electrical power consumption can be reduced. However, because the power switches 701, 702 require connection to the AC power source, the aforesaid schemes cannot be relied upon to ensure operation of the telephony instrument 703 in the event of power failure.

In order to ensure operability of telephony instruments in the event of power failure, it has been proposed heretofore to connect the aforesaid power switches 701, 702 to an uninterruptible power supply. However, use of the uninterruptible power supply results in added expense to consumers.

US 3,688,043 discloses a timer circuit including a first relay that operates a tape recorder of an automatic telephone answering apparatus for sending an outgoing message, and a second relay that operates another tape recorder of the automatic telephone answering apparatus for recording an incoming message. In operation, the presence of a ringing current at a telephone line enables switching operation of the first relay through a starter circuit. At this point, the tape recorder operates so that the previously recorded outgoing message is sent to the telephone line. At the endof the outgoingmessage, the second relay operates to stop operation of the tape recorder and to begin operation of the tape recorder for recording the incoming message. A signal discriminator circuit is provided to ensure that recording operation of the tape recorder continues until the end of the incoming message. A timer circuit is repeatedly started by a pulse generating circuit of the signal discriminator circuit for as long as the incoming message is present. After the elapse of a timer period set by the timer circuit and when the signal discriminator circuit no longer detects the presence of the incoming message (i.e. no further pulses are generated by the pulse generating circuit), the automatic telephone answering apparatus is restored to an initial standby state.

Therefore, the main object of the present invention is to provide a power switch device that utilizes phone loop signals to control the supply of electrical power to a telephony instrument and that permits operation of the telephony instrument even in the event of power failure.

According to the present invention, a power switch device is adapted for use with a telephony instrument that is connected to a local phone loop via a pair of telephone wires and that has a pair of power lines for connection to a power source. The power switch device comprises:
a rectifier adapted to be connected to the telephone wires and to process a phone loop signal present at the telephone wires for generating a direct current output;
a latching relay including an exciting coil and a switch unit adapted to interconnect one of the power lines to the power source;
a differentiator interconnecting the rectifier and the exciting coil of the latching relay, the exciting coil of the latching relay being excited by electric current flowing through the differentiator so as to enable the switch unit to make connection between said one of the power lines and the power source in order to enable operation of the telephony instrument when the phone loop signal present at the telephone wires is a ring signal;
an integrator connected between the rectifier and the exciting coil of the latching relay; and
a discharge control circuit connected to the differentiator and the integrator, the discharge control circuit inhibiting the integrator from discharging electric current when the phone loop signal present at the telephone wires is the ring signal, and allowing the integrator to discharge when the phone loop signal present at the telephone wires is neither the ring signal nor a talking signal, the exciting coil of the latching relay being excited by the electric current discharged by the integrator so as to enable the switch unit to break connection between said one of the power lines and the power source, thereby disabling operation of the telephony instrument.

Other features and advantages of the present invention will become apparent in the following detailed description of the preferred embodiment with reference to the accompanying drawings, of which:
Figures 1 and 2 are schematic circuit block diagrams illustrating the preferred embodiment of a power switch device according to the present invention when applied to a telephony instrument;
Figure 3 is a schematic electrical circuit diagram of the preferred embodiment; and
Figures 4 and 5 are schematic circuit block diagrams illustrating two conventional schemes for reducing electrical power consumption of a telephony instrument.

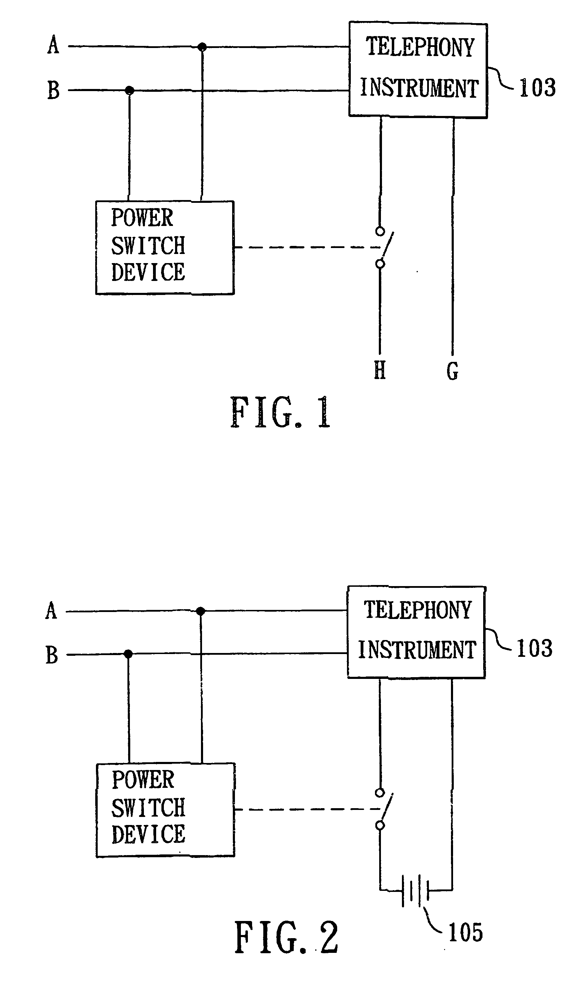

Referring to Figure 1, the preferred embodiment of a power switch device according to the present invention is adapted for use with a telephony instrument 103, such as facsimile machines, telephone answering machines, wireless telephone sets, home automation servers and office automation servers. The telephony instrument 103 is connected to a local phone loop via a pair of telephone wires (A, B), and is further connected to a power source via power lines (G, H). The power source may be an AC power source or a DC power source 105, such as a solar cell, as best shown in Figure 2.

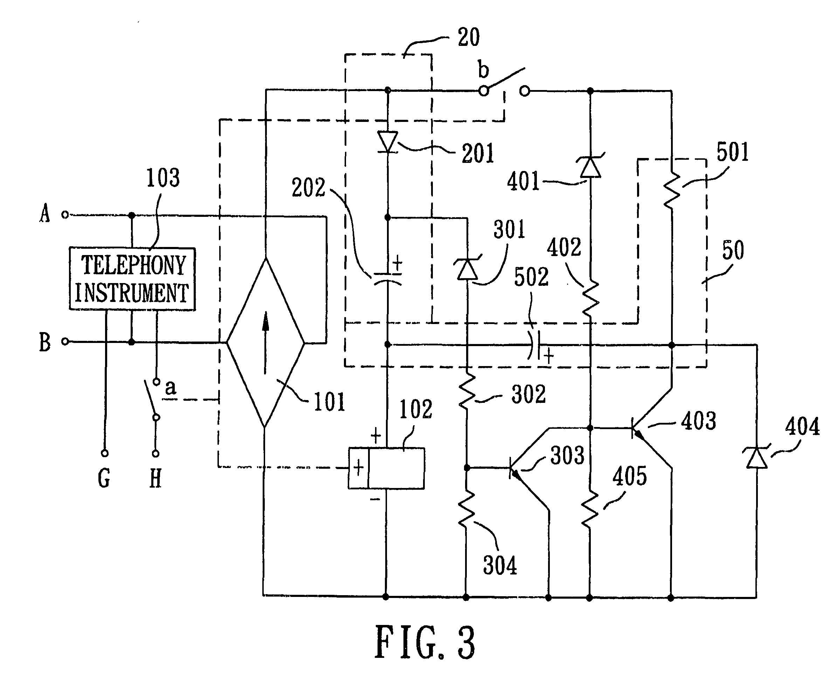

With further reference to Figure 3, the power switch device_is adapted to make or break connection between the telephony instrument 103 and the power source in accordance with the phone loop signal present at the telephone wires (A, B) . The power switch device generally comprises a rectifier 101, a latching relay with an exciting coil 102, a differentiator 20, and an integrator 50.

In this embodiment, the rectifier 101 is a bridge rectifier that is adapted to be connected to the telephone wires (A, B). The rectifier 101 processes the phone loop signal at the telephone wires (A, B) for generating a DC output.

The differentiator 20 connects a positive output terminal of the rectifier 101 to the exciting coil 102 of the latching relay, and includes a series connection of a diode 201 and a capacitor 202. Particularly, the diode 201 has an anode connected to the positive output terminal of the rectifier 101, and a cathode connected to a positive terminal of the capacitor 202. The capacitor 202 has a negative terminal connected to a positive terminal of the exciting coil 102. The exciting coil 102 has a negative terminal connected to a negative output terminal of the rectifier 101. The capacitor 202 is charged by the DC output from the rectifier 101 and thus controls the flow of exciting current to the exciting coil 102 of the latching relay when the phone loop signal present at the telephone wires (A, B) is a ring signal.

In this embodiment, the latching relay is a double-pole single-throw or double-throw latching relay switch. Aside from the exciting coil 102, the latching relay further includes a first switch unit (a) for making and breaking connection between the power source and the power line (H), and a second switch unit (b) for making and breaking connection between the positive output terminal of the rectifier 101 and the integrator 50. Particularly, when the exciting coil 102 of the latching relay is excited by the exciting current flowing through the differentiator 20, the first switch unit (a) will be enabled to make connection between the power source and the power line (H), and the second switch unit (b) will be enabled to make connection between the rectifier 101 and the integrator 50.

The integrator 50 is connected to the positive output terminal of the rectifier 101 via the second switch unit (b), and is further connected to the exciting coil 102. In this embodiment, the integrator 50 includes a series connection of a resistor 501 and a capacitor 502. The resistor 501 has a first resistor terminal connected to the second switch unit (b), and a second resistor terminal connected to a positive terminal of the capacitor 502. The capacitor 502 has a negative terminal connected to the positive terminal of the exciting coil 102. The capacitor 502 is adapted to be charged when the phone loop signal present at the telephone wires (A, B) is a talking signal.

The power switch device further includes a discharge control circuit connected to the differentiator 20 and the integrator 50. The discharge control circuit inhibits the capacitor 502 of the integrator 50 from discharging electric current when the phone loop signal present at the telephone wires (A, B) is the ring signal, and allows the capacitor 502 of the integrator 50 to discharge when the phone loop signal present at the telephone wires (A, B) is neither the ring signal nor the talking signal. The exciting coil 102 of the latching relay is excited by the electric current discharged by the integrator 50 so as to enable the first switch unit (a) to break connection between the power source and the power line (H) and so as to enable the second switch unit (b) to break connection between the rectifier 101 and the integrator 50. In this embodiment, the discharge control circuit includes zener diodes 301, 401, 404, resistors 302, 304, 402, 405, and NPN transistors 303, 403.

The zener diode 301 has a cathode connected to a junction of the diode 201 and the capacitor 202 of the differentiator 20. The zener diode 301 further has an anode connected to a first resistor terminal of the resistor 302. A second resistor terminal of the resistor 302 and a first resistor terminal of the resistor 304 are connected to a base terminal of the transistor 303. A second resistor terminal of the resistor 304 and an emitter terminal of the transistor 303 are connected to the negative output terminal of the rectifier 101. The zener diode 401 has a cathode connected to the positive output terminal of the rectifier 101 via the second switch unit (b) . The zener diode 401 further has an anode connected to a first resistor terminal of the resistor 402. The zener diode 401 may be replaced by a capacitor (not shown). A second resistor terminal of the resistor 402 and a first resistor terminal of the resistor 405 are connected to a collector terminal of the transistor 303. A second resistor terminal of the resistor 405 is connected to the negative output terminal of the rectifier 101. The transistor 403 has a collector terminal connected to a junction of the resistor 501 and the capacitor 502 of the integrator 50, a base terminal connected to the collector terminal of the transistor 303, and an emitter terminal connected to the negative output terminal of the rectifier 101. The zener diode 404 has a cathode connected to the collector terminal of the transistor 403, and an anode connected to the negative output terminal of the rectifier 101. The zener diode 404 is provided to protect the transistor 403 and the capacitor 502.

In use, when a ring signal is present at the telephone wires (A, B), the ring signal will be processed by the rectifier 101 to generate a high voltage rectified DC output. The DC output of the rectifier 101 will charge the capacitor 202 of the differentiator 20, and the charging current flowing through the capacitor 202 will also serve as the exciting current for the latching relay. When the exciting coil 102 of the latching relay is excited by the exciting current, the first and second switch units (a, b) of the latching relay will close, thereby making connection between the power source and the power line (H) and between the integrator 50 and the rectifier 101. At this time, electric power is supplied to the telephony instrument 103 for enabling operation of the latter, and the transistor 403 of the discharge control circuit inhibits the capacitor 502 of the integrator 50 from discharging electric current.

Thereafter, when the telephony instrument 103 changes to an off-hook state, i.e. low DC voltage talking signals are present at the telephone wires (A, B), the discharge control circuit allows the capacitor 502 of the integrator 50 to charge. Finally, when the telephony instrument 103 changes to an on-hook state, i.e. neither the ring signal nor the talking signal is present at the telephone wires (A, B), the discharge control circuit will allow the capacitor 502 to discharge instantaneously. The electric current discharged by the integrator 50 will excite the exciting coil 102 of the latching relay, thereby causing the first and second switch units (a, b) of the latching relay to open so as to break connection between the power source and the power line (H) and between the integrator 50 and the rectifier 101. The telephony instrument 103 is disabled at this time.

It has thus been shown that the power switch device of the present invention utilizes phone loop signals to control the supply of electrical power to the telephony instrument 103 so as to reduce electrical power consumption of the latter. In addition, the power switch device does not require the presence of AC power during use. As such, operation of the telephony instrument 103 is possible even in the event of power failure.

## Claims

1. A power switch device for a telephony instrument (103) that is connected to a local phone loop via a pair of telephone wires (A, B) and that has a pair of power lines (G, H) for connection to a power source (105) including:
a rectifier (101) adapted to be connected to the telephone wires (A, B) and to process a phone loop signal present at the telephone wires (A, B) for generating a direct current output, the power switch device being **characterized by**:
a latching relay including an exciting coil (102) and a first switch unit (a) adapted to interconnect one of the power lines (H) to the power source (105) ;
a differentiator (20) interconnecting the rectifier (101) and the exciting coil (102) of the latching relay, the exciting coil (102) of the latching relay being excited by electric current flowing through the differentiator (20) so as to enable the first switch unit (a) to make connection between said one of the power lines (H) and the power source (105) in order to enable operation of the telephony instrument (103) when the phone loop signal present at the telephone wires (A, B) is a ring signal;
an integrator (50) connected between the rectifier (101) and the exciting coil (102) of the latching relay; and
a discharge control circuit connected to the differentiator (20) and the integrator (50), the discharge control circuit inhibiting the integrator (50) from discharging electric current when the phone loop signal present at the telephone wires (A, B) is the ring signal, and allowing the integrator (50) to discharge when the phone loop signal present at the telephone wires (A, B) is neither the ring signal nor a talking signal, the exciting coil (102) of the latching relay being excited by the electric current discharged by the integrator (50) so as to enable the first switch unit (a) to break connection between said one of the power lines (H) and the power source (105), thereby disabling operation of the telephony instrument (103).

2. The power switch device as claimed in Claim 1, **characterized in that** the rectifier (101) is a bridge rectifier.

3. The power switch device as claimed in Claim 1, **characterized in that** the differentiator (20) includes a series connection of a diode (201) and a capacitor (202), the capacitor (202) being charged by the direct current output from the rectifier (101) when the phone loop signal present at the telephone wires (A, B) is the ring signal.

4. The power switch device as claimed in Claim 1, **characterized in that** the integrator (50) includes a series connection of a resistor (501) and a capacitor (502), the discharge control circuit permitting charging of the capacitor (502) when the phone loop signal present at the telephone wires (A, B) is the talking signal.

5. The power switch device as claimed in Claim 1, **characterized in that** the latching relay further includes a second switch unit (b) that makes connection between the rectifier (101) and the integrator (50) when the exciting coil (102) of the latching relay is excited by the electric current flowing through the differentiator (20), and that breaks connection between the rectifier (101) and the integrator (50) when the exciting coil (102) of the latching relay is excited by the electric current discharged by the integrator (50).

## Patentansprüche

1. Leistungsschalter für ein Telefongerät (103), das für ein Telefonleitungspaar (A, B) mit einem örtlichen Telefonnetz verbunden ist und zwei Stromleitungen (G, H) zum Anschluß an eine Stromquelle (105) aufweist, mit einem Gleichrichter (101), der an die Telefondrähte (A, B) anschließbar ist und ein Telefonleitungsschleifensignal, das die Telefondrähte (A, B) liefern, verarbeitet, um ein Gleichstromausgangssignal zu erzeugen, wobei der Leistungsschalter **gekennzeichnet ist durch**:
Ein Stromstoßrelais mit einer Erregerspule (102) und einer ersten Schaltereinheit (a), die mit einer der Stromleitungen (H) zur Stromquelle (105) verbindbar ist;
einen Differentiator (20), der zwischen den Gleichrichter (101) und die Erregerspule (102) des Stromstoßrelais geschaltet ist, wobei die Erregerspule (102) des Stromstoßrelais **durch** den elektrischen Strom erregt wird, der **durch** den Differentiator (20) fließt, so daß die erste Schaltereinheit (a) eine Verbindung zwischen der einen der Stromleitungen (H) und der Stromquelle (105) herstellt, um **dadurch** den Betrieb des Telefongerätes (103) zu ermöglichen, sobald das Telefonleitungsschleifensignal in den Telefondrähten (A, B) ein Freizeichen ist;
einen zwischen den Gleichrichter (101) und die Erregerspule (102) des Stromstoßrelais geschalteten Integrator (50) und **durch**
einen Entladungssteuerschaltkreis, der mit dem Differentiator (20) und dem Integrator (50) verbunden ist und den Integrator (50) daran hindert, elektrischen Strom abzugeben, wenn das Telefonleitungschleifensignal, das in den Telefondrähten (A, B) vorhanden ist, das Anrufsignal ist, und dem Integrator (50) ermöglicht zu entladen, sobald das Telefonleitungsschleifensignal in den Telefondrähten weder das Anrufsignal noch ein Sprechsignal ist, wobei die Erregerspule (102) des Stromstoßrelais **durch** den elektrischen Strom erregt wird, der von dem Integrator abgegeben wird, so daß die erste Schaltereinheit (a) die Verbindung zwischen entweder einer der Stromleitungen (H) oder der Stromquelle (105) unterbrechen kann und damit das Telefongerät (103) außer Betrieb setzt.

2. Leistungsschalter nach Anspruch 1, **dadurch gekennzeichnet, daß** der Gleichrichter (101) ein Brückengleichrichter ist.

3. Leistungsschalter nach Anspruch 1, **dadurch gekennzeichnet, daß** der Differentiator (20) einen Reihenanschluß einer Diode (201) und eines Kondensators (202) aufweist, wobei der Kondensator (202) durch den Gleichstromausgang des Gleichrichters (101) geladen wird, sobald das Telefonleitungsschleifensignal in den Telefondrähten (A, B) ein Anrufsignal ist.

4. Leistungsschalter nach Anspruch 1, **dadurch gekennzeichnet, daß** der Integrator (50) eine Reihenverbindung des Widerstands (501) und eines Kondensators (502) aufweist und daß der Entladungssteuerschaltkreis eine Aufladung des Kondensators (502) ermöglicht, sobald das Telefonleitungschleifensignal in den Telefondrähten (A, B) ein Sprechsignal ist.

5. Leistungsschalter nach Anspruch 1, **dadurch gekennzeichnet, daß** das Stromstoßrelais des weiteren eine zweite Schaltereinheit (b) aufweist, die zwischen dem Gleichrichter (101) und dem Integrator (50) eine Verbindung herstellt, sobald die Erregerspule (102) des Stromstoßrelais durch den elektrischen Strom erregt wird, der durch den Differentiator (20) fließt, und die die Verbindung zwischen dem Gleichrichter (101) und dem Integrator (50) unterbricht, sobald die Erregerspule (102) des Stromstoßrelais durch den elektrischen Strom erregt wird, den der Integrator (50) abgibt.

## Revendications

1. Dispositif de mise sous tension pour un appareillage téléphonique (103) qui est connecté à une boucle téléphonique locale par l'intermédiaire d'une paire de fils téléphoniques (A, B) et qui a une paire de lignes d'alimentation (G, H) pour la connexion à une source d'alimentation en courant (105) comprenant : un redresseur (101) adapté pour être connecté aux fils téléphoniques (A, B) et pour traiter un signal de la boucle téléphonique présent au niveau des fils téléphoniques (A, B) pour générer une sortie en courant continu, le dispositif de mise sous tension étant **caractérisé par le fait qu'**il comprend :
- un relais à verrouillage comprenant une bobine d'excitation (102) et une première unité de commutation (a) adaptée pour interconnecter l'une des lignes d'alimentation (H) à la source d'alimentation en courant (105) ;
- un différenciateur (20) interconnectant le redresseur (101) et la bobine d'excitation (102) du relais à verrouillage,- la bobine d'excitation (102) du relais à verrouillage étant excitée par le courant électrique circulant à travers le différenciateur (20) afin de permettre à la première unité de commutation (a) d'établir une connexion entre celle précitée des lignes d'alimentation (H) et la source d'alimentation en courant (105) dans le but d'activer le fonctionnement de l'appareillage téléphonique (103) lorsque le signal de la boucle téléphonique présent au niveau des fils téléphoniques (A, B) est un signal de sonnerie ;
- un intégrateur (50) connecté entre le redresseur (101) et la bobine d'excitation (102) du relais à verrouillage ; et
- un circuit de commande de décharge connecté au différenciateur (20) et à l'intégrateur (50), le circuit de commande de décharge empêchant l'intégrateur (50) de décharger le courant électrique lorsque le signal de la boucle téléphonique présent au niveau des fils téléphoniques (A, B) est le signal de sonnerie, et permettant à l'intégrateur (50) de se décharger lorsque le signal de la boucle téléphonique présent au niveau des fils téléphoniques (A, B) n'est ni un signal de sonnerie ni un signal de parole, la bobine d'excitation (102) du relais à verrouillage étant excitée par le courant électrique déchargé par l'intégrateur (50) de façon à permettre à la première unité de commutation (a) de rompre la connexion entre celle précitée des lignes d'alimentation (H) et la source d'alimentation en courant (105), désactivant ainsi le fonctionnement de l'appareillage téléphonique (103).

2. Dispositif de mise sous tension selon la revendication 1, **caractérisé par le fait que** le redresseur (101) est un redresseur en pont.

3. Dispositif de mise sous tension selon la revendication 1, **caractérisé par le fait que** le différenciateur (20) comprend une connexion en série d'une diode (201) et d'un condensateur (202), le condensateur (202) étant chargé par le courant continu sortant du redresseur (101) lorsque le signal de la boucle téléphonique présent au niveau des fils téléphoniques (A, B) est le signal de sonnerie.

4. Dispositif de mise sous tension selon la revendication 1, **caractérisé par le fait que** l'intégrateur (50) comprend une connexion en série d'une résistance (501) et d'un condensateur (502), le circuit de commande de décharge permettant le chargement du condensateur (502) lorsque le signal de la boucle téléphonique présent au niveau des fils téléphoniques (A, B) est le signal de parole.

5. Dispositif de mise sous tension selon la revendication 1, **caractérisé par le fait que** le relais à verrouillage comprend en outre une seconde unité de commutation (b) qui établit la connexion entre le redresseur (101) et l'intégrateur (50) lorsque la bobine d'excitation (102) du relais à verrouillage est excitée par le courant électrique circulant à travers le différenciateur (20), et qui rompt la connexion entre le redresseur (101) et l'intégrateur (50) lorsque la bobine d'excitation (102) du relais à verrouillage est excitée par le courant électrique déchargé par l'intégrateur (50).
